# EUROPÄISCHE PATENTANMELDUNG

(11) **EP 4 538 896 A1**
(43) Veröffentlichungstag der Anmeldung: **16.04.2025**
(21) Anmeldenummer: 24200707.8
(22) Anmeldetag: 17.09.2024
(51) Int. Cl.: G06F 11/3668

(54) **COMPUTER-IMPLEMENTIERTES VERFAHREN ZUM GENERIEREN VON MINDESTENS EINEM AUSFÜHRBAREN TEST**

(30) Priorität: 09.10.2023 DE 102023209826
(71) Anmelder: Siemens Aktiengesellschaft, 80333 München (DE)
(72) Erfinder: Klein, Cornel, 82041 Oberhaching (DE); Rothbauer, Stefan, 86156 Augsburg (DE); Sainz López, Andoni, 90762 Fürth (DE); Sauer, Horst, 80689 München (DE); Schmid, Reiner, 80538 München (DE); Schuster, Tobias, 85221 Dachau (DE); Schönhaar, Hannes, 81541 München (DE); Zeller, Marc, 81243 München (DE)
(74) Vertreter: Siemens Patent Attorneys

(57) **Zusammenfassung**

Die Erfindung betrifft ein computer-implementiertes Verfahren zum Generieren von mindestens einem ausführbaren Test, aufweisend die Schritte a. Bereitstellen eines Systemmodells (S1); wobei das System ein technisches System mit einer Mehrzahl von technischen Komponenten ist; wobei jede technische Komponente eine Hardware-Komponente oder eine Software-Komponente ist; b. Bereitstellen von mindestens einem Testmodell (S2); c. Bereitstellen eines Fehlermodells (S3); wobei das Fehlermodell eine vorbestimmte Anzahl von mindestens einem Fehlermodus festlegt; wobei der mindestens eine festgelegte Fehlermodus gleichzeitig an mindestens einer technischen Komponente der Mehrzahl der technischen Komponenten des technischen Systems wirksam ist; d. Erweitern des mindestens einen Testmodells mithilfe des Fehlermodells um den mindestens einen festgelegten Fehlermodus (S4); e. Erweitern des mindestens einen Testmodells um Testdaten (S5); wobei die Testdaten mindestens einen Ablauf stimulieren, in dem der mindestens eine festgelegte Fehlermodus im dem technischen System wirksam ist; f. Erweitern des mindestens einen Testmodells um mindestens eine erwartete Reaktion auf den mindestens einen Ablauf mithilfe des Systemmodells (S6); g. Generieren des mindestens einen ausführbaren Tests auf Basis des mindestens einen erweiterten Testmodells nach der Erweiterung (S7); wobei der mindestens eine ausführbare Test den mindestens einen festgelegten Fehlermodus berücksichtigt; und h. Bereitstellen des mindestens einen ausführbaren Tests (S8) .

Ferner betrifft die Erfindung ein technisches System und ein entsprechendes Computerprogrammprodukt.

## Beschreibung

Unabhängig vom grammatikalischen Geschlecht eines bestimmten Begriffes sind Personen mit männlicher, weiblicher oder anderer Geschlechteridentität mit umfasst.

### 1. Technisches Gebiet

Die Erfindung betrifft ein computer-implementiertes Verfahren zum Generieren von mindestens einem ausführbaren Test. Ferner ist die Erfindung auf ein entsprechendes technisches System und ein Computerprogrammprodukt gerichtet.

### 2. Stand der Technik

Sicherheitsrelevante technische Systeme auf den Anwendungsgebieten von eingebetteten Systemen (engl. embedded systems), beispielsweise auf dem Gebiet der Luftfahrt, der Medizintechnik oder der industriellen Fertigung gewinnen zunehmend an Bedeutung. Mit der zusätzlich steigenden Komplexität der technischen Systeme entwickelt sich ein Bedarf, die Sicherheit und die Qualität dieser technischen Systeme zu bewerten. Aus diesem Grund zielt die Systembewertung darauf ab, Fehler oder Unzulänglichkeiten in der Systemarchitektur hinsichtlich der Systemsicherheit aufzudecken. Je früher solche Fehler entdeckt werden, desto geringer sind die Kosten während des Entwicklungsprozesses für deren Beseitigung.

Typischerweise werden solche Sicherheitsbewertungen oder Analysen der technischen Systeme oder der Systemarchitekturen mit einer Bottom-up-Sicherheitsanalyse, wie beispielsweise einer Fehlermöglichkeits- und Fehlereinflussanalyse (engl. Failure Mode and Effect Analysis, FMEA), oder einer Top-down-Sicherheitsanalyse, wie beispielsweise einer Fehlerbaumanalyse (engl. Fault Tree Analysis, FTA), durchgeführt. Bei der Fehlerbaumanalyse kommen insbesondere Komponentenfehlerbäume zum Einsatz, da diese hierfür einen modellbasierten und einen komponentenbasierten Ansatz bieten.

Für sicherheitsrelevante Anwendungen solcher technischen Systeme ist üblicherweise der Nachweis der korrekten Funktionalität des technischen Systems auch bei Fehlern im technischen System erforderlich. Die hierfür zu berücksichtigenden Fehler werden von Sicherheitsnormen wie Cenelec (EN 50126, EN 50128, EN 50129, EN 50159) oder IEC 61508 abhängig von der Sicherheitseinstufung (SIL-Level) der betreffenden Funktion vorgegeben. Der Aufwand für den Nachweis, dass ein technisches System auch in Anwesenheit von Fehlern sicher funktioniert, erhöht sich mit zunehmender Komplexität der Anwendungen. Der Nachweis, dass ein technisches System auch in Anwesenheit von Fehlern sicher funktioniert, wird zu einem wesentlichen Anteil durch Tests realisiert. Gemäß dem Stand der Technik wird daher der praktische Nachweis in Form von Tests für das Verhalten des technischen Systems im Fehlerfall oft aus Aufwandsgründen nur stichprobenhaft durchgeführt.

Daher ist es wünschenswert diesen Nachweis effizienter und zuverlässiger zu gestalten.

Die vorliegende Erfindung stellt sich daher die Aufgabe ein computer-implementiertes Verfahren zum Generieren von mindestens einem ausführbaren Test bereitzustellen, welches effizienter und zuverlässiger ist.

### 3. Zusammenfassung der Erfindung

Die oben genannte Aufgabe wird erfindungsgemäß durch ein computer-implementiertes Verfahren zum Generieren von mindestens einem ausführbaren Test gelöst, aufweisend die Schritte
a. Bereitstellen eines Systemmodells; wobei
   das System ein technisches System mit einer Mehrzahl von technischen Komponenten ist; wobei
   jede technische Komponente eine Hardware-Komponente oder eine Software-Komponente ist;
b. Bereitstellen von mindestens einem Testmodell;
c. Bereitstellen eines Fehlermodells; wobei
   das Fehlermodell eine vorbestimmte Anzahl von mindestens einem Fehlermodus festlegt; wobei
   der mindestens eine festgelegte Fehlermodus gleichzeitig an mindestens einer technischen Komponente der Mehrzahl der technischen Komponenten des technischen Systems wirksam ist;
d. Erweitern des mindestens einen Testmodells mithilfe des Fehlermodells um den mindestens einen festgelegten Fehlermodus;
e. Erweitern des mindestens einen Testmodells um Testdaten; wobei
   die Testdaten mindestens einen Ablauf stimulieren, in dem der mindestens eine festgelegte Fehlermodus im dem technischen System wirksam ist;
f. Erweitern des mindestens einen Testmodells um mindestens eine erwartete Reaktion auf den mindestens einen Ablauf mithilfe des Systemmodells;
g. Generieren des mindestens einen ausführbaren Tests auf Basis des mindestens einen erweiterten Testmodells nach der Erweiterung; wobei
   der mindestens eine ausführbare Test den mindestens einen festgelegten Fehlermodus berücksichtigt; und
h. Bereitstellen des mindestens einen ausführbaren Tests.

Dementsprechend ist die Erfindung auf ein computer-implementiertes Verfahren zum Generieren von mindestens einem ausführbaren Test gerichtet. Mit anderen Worten wird der Test erzeugt, welcher in einer Testumgebung ausgeführt werden kann. Bevorzugt ist der Test ein fehlerorientierter Test.

Zunächst werden die Eingabedaten bereitgestellt, nämlich die unterschiedlichen Eingabemodelle. Die Eingabemodelle sind das Systemmodell, das Testmodell und das Fehlermodell. Das Systemmodell beschreibt das Verhalten des technischen Systems gemäß seinen funktionalen Anforderungen. Es beschreibt die sich durch das Zusammenspiel, der im technischen System vorhandenen technischen Komponenten ergebenden Systemfunktionen. Das Systemmodell kann in Form von UML-Diagrammen oder Activity Charts vorliegen.

Das System ist als technisches System mit technischen Komponenten ausgebildet. Ein beispielhaftes technisches System ist eine industrielle Anlage mit ihren technischen Komponenten, wie Robotereinheiten etc. Weitere beispielhafte technische Systeme sind autonome Fahrzeuge und autonome Züge. Die technischen Systeme können sicherheitsrelevant oder sicherheitskritisch sein. Die Funktionen oder Anwendungen der technischen Systeme und deren technischen Komponenten können ebenfalls sicherheitsrelevant sein.

Das Testmodell beschreibt die für den Test eines Systems wichtigen Eigenschaften. Es bildet bevorzugt das Systemverhalten für die betrachteten Testszenarien im fehlerfreien Zustand ab.

Das Fehlermodell beschreibt die für das technische System relevanten Einflüsse von Fehlern der beteiligten technischen Komponenten oder bereitgestellten Funktionen. Das Fehlermodell weist ein oder mehrere Fehlermodi auf. Das Fehlermodell ist bevorzugt system-spezifisch. Das Fehlermodell kann beispielsweise auf oder aus den oben genannten etablierten Analysetechniken übernommen werden, wie FMEA und FTA.

Beispielhafte Fehlermodi sind fehlerhafte Nachrichten, die zwischen den technischen Komponenten des technischen Systems übermittelt werden. Dabei können die Fehlermodi gleichzeitig an einer oder mehreren technischen Komponenten des technischen Systems wirken. Mit anderen Worten sind mehrere Fehlermodi aktiv. Beispielsweise gehen an einer technischen Komponente mehrere fehlerhafte Nachrichten ein. Dies kann zu einer fehlerhaften Reaktion der technischen Komponente auf die fehlerhafte Nachricht führen.

Das Testmodell wird anhand oder auf Basis des Systemmodells und des Fehlermodells erweitert. Das Testmodell wird um den Fehlermodus, die Testdaten und die Reaktion erweitert. Die Testdaten sind dabei die Daten, die für die Tests verwendet werden. Die Testdaten können Werte für die Variablen umfassen, die für die Stimulation des gewünschten Ablaufs verwendet werden. Der ausführbare Test wird anhand oder auf Basis des erweiterten Testmodells erzeugt und bereitgestellt.

Die Eingabedaten können über eine oder mehrere Eingabeschnittstellen empfangen werden. Zusätzlich können die Ausgabedaten, wie der ausführbare Test, auch über eine oder mehrere Ausgabeschnittstellen gesendet werden. Die Schnittstellen können als serielle oder parallele Schnittstellen ausgebildet sein. Die Schnittstellen stellen vorteilhafterweise eine effiziente und reibungslose Datenübertragung zwischen den Recheneinheiten sicher. Die Daten können zwischen den Recheneinheiten bidirektional ausgetauscht werden ohne Datenstau.

Der Vorteil der vorliegenden Erfindung liegt darin, dass die betrachteten Fehlermodi (gemäß Definition im Fehlermodell) vollständig berücksichtigt werden.

Die vorliegende Erfindung stellt dadurch sicher, dass die Tests effizient sowie zuverlässig ermittelt und bereitgestellt werden. Die Tests sind dabei unmittelbar ausführbar und können somit unmittelbar nach der Generierung in der Testumgebung eingesetzt werden.

Die Ausführung der Tests erhöht insgesamt die Zuverlässigkeit sowie die Sicherheit des zugrundeliegenden technischen Systems, wie industrielle Anlage. Der Test stellt einen Nachweis dar, dass das technische System in den durch die Tests realisierten Fehlerszenarien wie gewünscht sicher funktioniert. Die Sicherheit des technischen Systems wird somit verbessert, da potentiell unsicheres Verhalten in den Tests erkannt und korrigiert werden kann. Die Ausfallzeiten aufgrund der Fehler oder der fehlerhaften Funktionen der technischen Komponenten und/oder der technischen Anlagen werden signifikant reduziert. Die Wartungsarbeiten können ebenfalls reduziert werden.

Mit anderen Worten ermöglicht die vorliegende Erfindung durch die ausführbaren Tests den Nachweis effizienter zu gestalten, dass ein technisches System auch bei Anwendung definierter Fehlermodelle die Funktionalität korrekt erbringt.

In einer Ausgestaltung wird das mindestens eine Testmodell auf Basis des Systemmodells erzeugt. Dementsprechend kann das Testmodell manuell erstellt oder generiert werden, bevorzugt abhängig von der vorliegenden Systembeschreibung. Somit kann das Testmodell in Form von Activity Charts oder Use Case Diagrammen vorliegen. Alternativ kann das Testmodell aus dem Systemmodell generiert werden.

In einer Ausgestaltung umfasst das Bereitstellen des mindestens einen Testmodells das Generieren jeweils eines Testmodells für jede Kombination des mindestens einen festgelegten Fehlermodus.

In einer Ausgestaltung weist das Verfahren weiterhin den Schritt Durchführen einer Maßnahme auf, wobei die Maßnahme ausgewählt ist aus der Gruppe bestehend aus:
- Ausgeben des mindestens einen ausführbaren Tests und/oder zugehöriger Daten auf einer Anzeigeeinheit;
- Speichern des mindestens einen ausführbaren Tests und/oder zugehöriger Daten in einer Speichereinheit;
- Übermitteln des mindestens einen ausführbaren Tests und/oder zugehöriger Daten an eine Recheneinheit; und
- Ausführen des mindestens einen ausführbaren Tests in einer Testumgebung.

Dementsprechend können eine oder mehrere Maßnahmen nach der Bereitstellung der ausführbaren Tests als Ausgabe des erfindungsgemäßen Verfahrens eingeleitet werden. Die Maßnahmen können gleichzeitig, nacheinander oder auch stufenweise durchgeführt werden.

Als erstes kann der ausführbare Test einem Nutzer, einem Anwender oder einem Betreiber auf einer Anzeigeeinheit einer Recheneinheit angezeigt werden. Weiterhin kann der ausführbare Test gespeichert werden, der Test selbst oder der Test kann in Form einer entsprechenden Nachricht oder Mitteilung an eine andere Einheit, wie ein Endgerät, eine Steuereinheit oder sonstige Recheneinheit übertragen werden. Die empfangende Recheneinheit kann nach Empfang ebenfalls weitere entsprechende Maßnahmen einleiten. Beispielsweise kann der ausführbare Test überprüft und/oder zur Ausführung freigeben werden, vor der Ausführung. Alternativ kann der Test auch ohne Überprüfung und/oder Freigabe unmittelbar ausgeführt werden.

Ferner betrifft die Erfindung ein technisches System zum Durchführen des obigen Verfahrens.

Die Erfindung betrifft ferner ein Computerprogrammprodukt mit einem Computerprogramm, das Mittel zur Durchführung des oben beschriebenen Verfahrens, wenn das Computerprogramm auf einer programmgesteuerten Einrichtung zur Ausführung gebracht wird.

Ein Computerprogrammprodukt, wie z.B. ein Computerprogramm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computerprogramm-Mittel erfolgen. Als programmgesteuerte Einrichtung kommt insbesondere eine Steuereinrichtung, wie beispielsweise eine Industriesteuerungs-PC oder eine Speicherprogrammierbare Steuerung oder ein Programmable Logic Controller, kurz PLC, oder ein Mikroprozessor für eine Smartcard oder dergleichen in Frage.

### 4. Kurze Beschreibung der Zeichnungen

In der folgenden detaillierten Beschreibung werden vorliegend bevorzugte Ausführungsformen der Erfindung weiter beschrieben mit Bezug auf die folgende Figur.

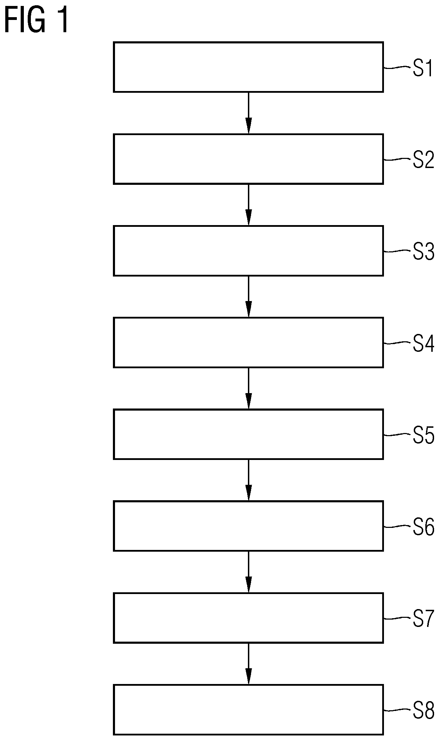

FIG 1 zeigt ein schematisches Ablaufdiagramm des erfindungsgemäßen Verfahrens.

### 5. Beschreibung der bevorzugten Ausführungsformen

Im Folgenden werden bevorzugte Ausführungsformen der vorliegenden Erfindung in Bezug auf die Figur 1 beschrieben.

Figur 1 stellt ein Ablaufdiagramm des erfindungsgemäßen Verfahrens mit den Verfahrensschritten S1 bis S8 schematisch dar.

In einem ersten Verfahrensschritt wird das Systemmodell bereitgestellt S1. Das System ist ein technisches System mit einer Mehrzahl von technischen Komponenten. Jede technische Komponente ist eine Hardware-Komponente oder eine Software-Komponente.

In einem zweiten Verfahrensschritt wird das mindestens eine Testmodell bereitgestellt S2.

In einem weiteren Verfahrensschritt wird das Fehlermodell mit mindestens einem Fehlermodus breitgestellt S3. Das Fehlermodell legt eine vorbestimmte Anzahl von einem oder mehreren Fehlermodi fest. Die festgelegten Fehlermodi sind gleichzeitig an mindestens einer technischen Komponente des technischen Systems wirksam.

In einem weiteren Verfahrensschritt wird das mindestens eine Testmodell mithilfe des Fehlermodells um den mindestens einen Fehlermodus erweitert S4. Die Erweiterung des Testmodells bewirkt, dass weitere Abläufe (zusätzlich zu den bisher vorhandenen) möglich werden.

Mit anderen Worten, wird das mindestens eine Testmodell mithilfe des Fehlermodells um die Fehlermodi erweitert, so dass zusätzliche Abläufe in das Testmodell eingebracht werden, die dem Verhalten des technischen Systems bei Wirksamkeit der Fehlermodi entsprechen.

In einem weiteren Verfahrensschritt wird das mindestens eine Testmodell um Testdaten erweitert S5. Die Erweiterung um die Testdaten stellt sicher, dass die zuvor durch den Fehlermodus möglichen Abläufe stimuliert werden.

In einem weiteren Verfahrensschritt wird das mindestens eine Testmodell um mindestens eine erwartete Reaktion auf den mindestens einen Ablauf mithilfe des Systemmodells erweitert S6.

In einem weiteren Verfahrensschritt wird der mindestens eine ausführbare Test auf Basis des mindestens einen erweiterten Testmodells nach der Erweiterung generiert S7. Der mindestens eine ausführbare Test berücksichtigt die festgelegten Fehlermodi.

Im letzten Verfahrensschritt wird der mindestens eine ausführbare Test bereitgestellt S8.

### Erweitern des mindestens einen Testmodells mithilfe des Fehlermodells um den mindestens einen Fehlermodus

Gemäß einer Ausführungsform der Erfindung wird die Anzahl k der Fehlermodi, die gleichzeitig für den Test des technischen Systems wirksam sein sollen aus einer definierten Menge von 1, ..., n festgelegt. k beschreibt die Anzahl der im Testmodell gleichzeitig wirksamen Fehlermodi an den ausgewählten technischen Komponenten.

Dabei können mehrere Fehlermodi gleichzeitig an einer technischen Komponente wirksam sein. Beispielsweise werden die Fehlermodi betrachtet, die nur eine technische Komponente gleichzeitig betreffen. Alternativ können mehrere Fehlermodi an unterschiedlichen technischen Komponenten im technischen System betrachtet werden (demnach unabhängige Fehler an unterschiedlichen technischen Komponenten), oder auch mehrere abhängige Fehler an einer technischen Komponente.

Das Testmodell wird um das Ablaufverhalten im Fehlerfall erweitert. Gemäß einer Ausführungsform der Erfindung werden unabhängige Testmodelle erzeugt, welche die oben definierte Eigenschaft aufweisen, dass k Fehlermodi gleichzeitig wirksam sind. Für die Erzeugung werden alle zulässigen Kombinationen der k Fehlermodi ermittelt, die von den Fehlermodi betroffen sind. Die Fehlermodi wirken dabei an den k technischen Komponenten oder auch weniger Komponenten, falls mehrere Fehlermodi an einer technischen Komponente gleichzeitig wirksam sind. Für jede Kombination dieser Kombinationen wird ein neues Testmodell erstellt. Dieses Testmodell beschreibt den Fall, in dem die betroffenen technischen Komponenten diesen definierten Fehlermodus aufweisen.

### Erweitern des mindestens einen Testmodells um Testdaten

Gemäß einer Ausführungsform wird das Testmodell um Transitionen der betrachteten technischen Komponente zum Empfänger des Informationsflusses sowie Kontextinformationen ergänzt. Die Kontextinformationen enthalten, welcher Fehlermodus für diesen Übergang relevant ist. Ferner werden die Empfänger des Informationsflusses gemäß des im Systemmodell definierten Systemverhaltens für diesen Fehlermodus ermittelt.

### Erweitern des mindestens einen Testmodells um mindestens eine erwartete Reaktion auf den mindestens einen Ablauf mithilfe des Systemmodells

Dementsprechend wird das Testmodell zur Stimulation der Fehlermodi erweitert. Gemäß einer Ausführungsform werden die an den technischen Komponenten notwendigen Auswahlmöglichkeiten für Testdaten ermittelt, um die Abläufe im Fehlerfall zu stimulieren. Die Ermittlung kann anhand des Fehlermodells erfolgen, beispielsweise gemäß dem Standard EN 50159. Hierfür wird das Testmodell um geeignete Kategorien und Auswahlmöglichkeiten für Testdaten erweitert. Das Testmodell enthält die Information darüber, welche Fehlermodi gerade wirksam sind. Beispielsweise können die in EN 50159 definierten Nachrichtenfehler verwendet werden. Beispielhafte Nachrichtenfehler sind wiederholte Nachricht, ausgelassene Nachricht, eingefügte Nachricht, resequenzierte Nachricht, verfälschte Nachricht, verzögerte Nachricht und manipulierte Nachricht.

Mit anderen Worten werden die Testdaten gemäß eines Testdatenmodells ausgewählt gemäß einer Ausführungsform der Erfindung. Ein übliches Modell kategorisiert die Daten und bietet für jede Kategorie die Auswahlmöglichkeiten.

Beispielsweise für eine ganzzahlige, positive Eingabemöglichkeit ist die Kategorie "Test-Integer" mit den Auswahlmöglichkeiten 0, 100, 255.

Dies reduziert die sich ergebenden Testmöglichkeiten. Bei sinnvoller Auswahl der Auswahlmöglichkeiten bleibt die Aussagekraft der Tests hoch, wenn die Tests die Auswahlmöglichkeiten vollständig abdecken.

Beispielsweise kommt die fehlerfreie Nachrichtensequenz A0, B0, C0 an einer technischen Komponente an. Falls an der technischen Komponente die zwei Fehlermodi verfälschte Nachricht sowie eingefügte Nachricht auftreten, lautet die Nachrichtensequenz folgendermaßen A0, B1, X, C0. Die Nachricht A wurde verfälscht. Ferner tritt eine zusätzliche Nachricht X auf.

Das erweiterte Testmodell dient als Basis für die Generierung der ausführbaren Tests. Bevorzugt werden auch vorher nicht im Fokus des Testmodells stehende Tests ermittelt. Diese Tests umfassen die zusätzliche Fehlerabläufe und die hierfür notwendigen Stimulationen. Die erwarteten Ergebnisse der Tests können sich aus den im Systemmodell hinterlegten Abläufen und Systemreaktionen ergeben.

Gemäß einer Ausführungsform werden die Tests in einer Testumgebung ausgeführt.

Hierfür kann zunächst eine Prüfung der Testumgebung erfolgen. Für jeden Testfall kann geprüft werden, ob die notwendigen Eigenschaften im vorliegenden technischen System vorhanden sind. Beispielsweise weist das zum Testen verwendete technische System bzw. dessen konkrete Konfiguration eine neue technische Komponente auch auf, wenn durch einen Fehlerfall die neue technische Komponente adressiert wird. Hierfür kann weiterhin eine Erweiterung der Testumgebung erfolgen. Für alle Testfälle, bei denen die aktuell vorhandene Testumgebung nicht den notwendigen Anforderungen entspricht, kann die Testumgebung um die benötigten Eigenschaften erweitert werden. Beispielsweise wird eine neue technische Komponente in der Testumgebung mitkonfiguriert, wenn durch einen Fehlerfall die neue technische Komponente adressiert wird.

## Patentansprüche

1. Computer-implementiertes Verfahren zum Generieren von mindestens einem ausführbaren Test, aufweisend die Schritte:
a. Bereitstellen eines Systemmodells (S1); wobei
das System ein technisches System mit einer Mehrzahl von technischen Komponenten ist; wobei
jede technische Komponente eine Hardware-Komponente oder eine Software-Komponente ist;
b. Bereitstellen von mindestens einem Testmodell (S2);
c. Bereitstellen eines Fehlermodells (S3); wobei
das Fehlermodell eine vorbestimmte Anzahl von mindestens einem Fehlermodus festlegt; wobei
der mindestens eine festgelegte Fehlermodus gleichzeitig an mindestens einer technischen Komponente der Mehrzahl der technischen Komponenten des technischen Systems wirksam ist;
d. Erweitern des mindestens einen Testmodells mithilfe des Fehlermodells um den mindestens einen festgelegten Fehlermodus (S4);
e. Erweitern des mindestens einen Testmodells um Testdaten (S5); wobei
die Testdaten mindestens einen Ablauf stimulieren, in dem der mindestens eine festgelegte Fehlermodus im dem technischen System wirksam ist;
f. Erweitern des mindestens einen Testmodells um mindestens eine erwartete Reaktion auf den mindestens einen Ablauf mithilfe des Systemmodells (S6);
g. Generieren des mindestens einen ausführbaren Tests auf Basis des mindestens einen erweiterten Testmodells nach der Erweiterung (S7); wobei
der mindestens eine ausführbare Test den festgelegten Fehlermodus berücksichtigt; und
h. Bereitstellen des mindestens einen ausführbaren Tests (S8) .

2. Computer-implementiertes Verfahren nach Anspruch 1, wobei das mindestens eine Testmodell auf Basis des Systemmodells erzeugt wird.

3. Computer-implementiertes Verfahren nach Anspruch 1 oder Anspruch 2, wobei das Bereitstellen des mindestens einen Testmodells das Generieren jeweils eines Testmodells für jede Kombination des mindestens einen festgelegten Fehlermodus umfasst.

4. Computer-implementiertes Verfahren nach einem der vorhergehenden Ansprüche, weiterhin aufweisend den Schritt Durchführen einer Maßnahme, wobei die Maßnahme ausgewählt ist aus der Gruppe bestehend aus:
- Ausgeben des mindestens einen ausführbaren Tests und/oder zugehöriger Daten auf einer Anzeigeeinheit;
- Speichern des mindestens einen ausführbaren Tests und/oder zugehöriger Daten in einer Speichereinheit;
- Übermitteln des mindestens einen ausführbaren Tests und/oder zugehöriger Daten an eine Recheneinheit; und
- Ausführen des mindestens einen ausführbaren Tests in einer Testumgebung.

5. Technisches System zum Durchführen des Verfahrens nach einem der vorhergehenden Ansprüche.

6. Computerprogrammprodukt mit einem Computerprogramm, das Mittel zur Durchführung des Verfahrens nach einem der Ansprüche 1 bis 4 aufweist, wenn das Computerprogramm auf einer programmgesteuerten Einrichtung zur Ausführung gebracht wird.
